# EUROPEAN PATENT APPLICATION

(11) **EP 3 342 680 A1**
(43) Date of publication of application: **04.07.2018**
(21) Application number: 17209964.0
(22) Date of filing: 22.12.2017
(51) Int. Cl.: B62D 13/02

(54) **AUTOMATIC ALIGNMENT SETUP FOR MECHANICAL, HYDRAULIC AND ELECTRICAL EFFECT SYSTEMS**

(30) Priority: 30.12.2016 TR 201620358
(71) Applicant: Tirsan Treyler Sanayi Ve Ticaret Anonim Sirketi, 54580 Sakarya (TR)
(72) Inventor: KESK N, Mustafa smail, SAKARYA (TR)
(74) Representative: Yamankaradeniz, Kemal

(57) **Abstract**

The invention is an automatic alignment setup that is able to perform automatic alignment at any angle between tractor and trailers used in heavy load transportation and that has at least one fifth wheel (1.2) and a gooseneck (1.3.1) with at least two connection points set up on this fifth wheel (1.2), and it is characterized in that; it incorporates a mechanical effect system (4) with connection wires (4.5) secured at at least two points between the said fifth wheel (1.2) and steering hub (18).

## Description

### Technical Field

The invention relates to automatic alignment setup of Lowbed, Low Loader and modular vehicle types with hydro-mechanical steering systems and used for heavy load transportation.

The said invention is characterized in that it is able to perform automatic alignment with any angle between the tractor and trailer and primarily relates to an automatic alignment setup with simpler structure compared to those utilized in existing systems.

### Previous Technique

Closed loop steering systems move the wheels of the trailer to an angle proper to that of tractor movement depending on steering angle of the tractor. It performs this in all steering angles of the tractor by means of hydraulic cylinders. This proper positioning of trailer wheels according to Ackerman Principle is provided with the dimensions of hydraulic cylinders during design stage. There are 4 hydraulic cylinders in total on a trailer, two being on the fifth wheel and two being on axle part. In a closed loop, the front and rear cylinders operate dependently on each other. However, when trailer wheels are turned manually with electro-hydraulic engine drive, the positions of front and rear cylinders are disrupted per Ackerman Principle. Restoring the positions to their original state is called Alignment.

Closed loop steering systems have two types of alignment systems, full automatic and semi automatic. Both systems have advantages over each other. However, the biggest disadvantage with both systems is that the tractor is not able to perform alignment in all angles. The tractor performs alignment only in certain angles or when straight. The shortcomings and inadequacy of these applications are as follows.

### Full Automatic Alignment System,

Full automatic alignment system works as follows. There is an angle sensor (potentiometer) on the fifth wheel calculating the angle between the tractor and trailer. Likewise, there is an angle sensor (potentiometer) on steering hub in order to calculate the angles of trailer wheels. The angle sensor on the fifth wheel is used as input while the angle sensor on the steering hub is used as feedback provider.

On this system, one or multiple microcontrollers (ECU) are used. A transfer function, formed previously to ensure Ackerman Principle depending on trailer length and steering angles of wheels on steering axle, is installed on the microcontroller (ECU). Thus, at which angle the trailer wheels must be is calculated with transfer function depending on the information received from the angle sensor located on the fifth wheel. The wheels are turned left or right by means of electro-hydraulic pump according to the value calculated with this calculation. Turning process continues until the wheels achieve the correct angle. The fact that the wheels are at correct angle is verified with the information received from the angle sensor at the axle part.

Full automatic alignment system can only operate within ±35° angle range. Automatic alignment cannot be used at angles exceeding this range. The reason of this is that the transfer function installed on the microcontroller is non-linear in states where angle exceeds ±35°.

Full automatic alignment system also possesses the following technical inadequacies.

Automatic alignment performed with electronic controller unit (ECU) and analog output angle sensors is an expensive system in terms of cost.

Electronic controller units (ECU) are usually not resistant to vibration, cold and hot weather, dust and water. The electronic controller units manufactured to be resistant to the said environmental disruptive factors have high costs.

Usage of an automatic alignment system with electronic controller unit is complex and confusing for trailer drivers.

If algorithm of software in electronic controller unit does not have closed loop control structure, the accuracy and consistency of the automatic alignment function may vary.

### Semi Automatic Alignment System,

Semi automatic alignment system works as follows. There are two lamps on front left and front right of trailer. These lamps indicate, for the driver, whether the trailer is turned towards right or left. This is performed by the two inductive sensors located on the fifth wheel however not turning with fifth wheel. These sensors follow a special bracket welded on the fifth wheel. When tractor turns right, the lamp on the right turns on while the one on the left turns off. Likewise, when the tractor turns left, the lamp on the left turns on while the one on the right turns off. The lamps are turned on at the same time only when the angle between the trailer and tractor is 0°, in other words, they are straight.

On the wired control box, there are two lamps, one for right and one for left. These lamps show to the operator if the trailer wheels are turned right or left. If the lamps are turned on at the same time, this indicates that the trailer wheels are straight. Semi automatic alignment system only performs automatic alignment when the angle between tractor and trailer is 0°. It will not work otherwise. When the angle between trailer and tractor is 0°, two lamps on the left and right of gooseneck will also light up. Driver can only use automatic alignment when these lamps are on at the same time.

### Explanation of the Invention

The main purpose of the invention is to make automatic alignment system work at any angle between tractor and trailer.

An important purpose of the invention is to turn a mechanical guide located at axle part synchronously with steering motion of tractor. Thus, the movement of mechanical guide is controlled at axle area and automatic alignment is performed. The steering motion of tractor can be transfered to axle in 3 different forms. These are: mechanical, hydraulic and electrical methods.

The purpose of the invention is reduction of material cost through usage of electrical control circuit (electrical logic circuit) consisting of relays used in electric circuits and digital signal output inductive sensors instead of electronic controller unit and analog signal output angle sensors used in full automatic alignment systems.

The purpose of the invention is to present an electrical design that is simpler compared to both full automatic alignment system and semi automatic alignment system.

The purpose of the invention is to allow much less material usage compared to both systems. This translates into more employment in manufacture and faster production processes through cost reductions.

The purpose of the invention is to provide more accurate and consistent operation compared to light indicated automatic alignment system, electronic controller system.

The purpose of the invention is usage more suited to outdoor environment conditions.

The purpose of the invention is to present an easier and more successful setup in terms of diagnostics and troubleshooting.

In order to achieve the aforementioned purposes; the invention is an automatic alignment setup that is able to perform automatic alignment at any angle between tractor and trailers used in heavy load transportation and that has at least one fifth wheel and a gooseneck with at least two connection points set up on this fifth wheel, and it is characterized in that it incorporates;
- a mechanical effect system with connection wires secured at at least two points, set up between the said fifth wheel and steering hub,
- an electrical effect system with servo motor, angle sensor and securing shaft, set up between the said fifth wheel and steering hub,
- a hydraulic effect system with fifth wheel wire connections and connection wires secured at at least two points, front cylinder, rear cylinder and inductive sensors, set up between the said fifth wheel and steering hub.

### Figures to Help Understanding the Invention

Figure-1; General view of the system of previous technique.
Figure-2; Top general view of the mechanical guide automatic alignment system of the invention.
Figure-3; Top general view of the electrical mechanical guide automatic alignment system of the invention.
Figure-4; Top general view of hydraulic system electrical mechanical guide automatic alignment system of the invention.

### Part Numbers

- 1-: Automatic Alignment Setup
- 1.1: Fifth wheel center of rotation
- 1.2: Fifth wheel
- 1.3: Gooseneck hydraulic cylinders
- 1.3.1: Gooseneck
- 1.4: Hydraulic hoses
- 1.5: Axle area hydraulic cylinders
- 1.6: Steering center
- 1.7: Short rod connections
- 1.8: Steering hub
- 1.9: Steering center of rotation
- 2: Hydraulic effect system
- 2.1: Fifth wheel wire connections
- 2.2: Connection wires
- 2.3: Front movement transfer bracket centre
- 2.4: Front movement transfer bracket wire connection
- 2.5: Front cylinders
- 2.6: Rear cylinders
- 2.7: Front movement transfer bracket wire connection
- 2.8: Guide pin
- 2.9: Mechanical guide wire connection pin
- 2.10: Inductive sensors
- 2.11: Mechanical guide
- 2.12: Mechanical guide center of rotation
- 2.13: Connection wires
- 2.14: Rear movement transfer bracket
- 2.15: Rear cylinder shaft connection point
- 2.16: Front cylinder shaft connection point
- 2.17: Front movement transfer bracket
- 2.18: Hydraulic hoses
- 2.19: Sensor connection bracket
- 3: Electrical effect system
- 3.1: Angle sensor
- 3.2: Securing shaft
- 3.3: Angle sensor electrical cable
- 3.4: Servo driver
- 3.5: Servo motor electrical cable
- 3.6: Servo motor
- 3.7: Mechanical guide wire connection
- 3.8: Connection wire
- 3.9: Shaft securing point
- 3.10: Angle sensor cylinder
- 4: Mechanical effect system
- 4.1: Connection pin
- 4.2: Guide pin
- 4.3: Rear guide pin
- 4.4: Mechanical guide wire connection pin
- 4.5: Connection wire

### Detailed Description of the Invention

On Figure-2; the automatic alignment setup that is able to perform automatic alignment at any angle between tractor and trailers used in heavy load transportation and that has at least one fifth wheel (1.2) and a gooseneck (1.3.1) with at least two connection points set up on this fifth wheel (1.2) is illustrated; The said automatic alignment setup (1) incorporates a mechanical effect system (4) with connection wires (4.5) secured at at least two points between the said fifth wheel (1.2) and steering hub (18). In addition, it incorporates connection pins (4.1) and guide pins (4.2) and rear guide pins (4.3) of the said mechanical effect system and mechanical guide wire connection pins (4.4) secured on the steering center (1.6) of the said mechanical effect system (4).

On Figure-3; top general view of the electrical efffect system (3) is illustrated. It consists of the electric effect system (3) with servo motor (3.6), angle sensor (3.1) and securing shaft (3.2) set up between the said fifth wheel (1.2) and steering hub (18). It shows the angle sensor electrical cable, mechanical guide wire connection (3.8) and servo motor electrical cable (3.5) of this electrical effect system (3) and at least one servo driver (3.4) of the said electrical effect system (3). It illustrates connection wire (3.8) and one shaft securing point (3.9) and angle sensor cylinder (3.10) of this electrical effect system (3).

Figure-4 demonstrates the hydraulic effect system (2). It shows the hydraulic effect system (2) with fifth wheel wire connections (2.1) and connection wires (2.2) secured at at least two points, front cylinder (2.5), rear cylinder (2.6) and inductive sensors (2.10), set up between the said fifth wheel (1.2) and steering hub (18). It has the front movement transfer bracket center (2.3) front movement transfer bracket wire connection (2.4) and front movement transfer bracket wire connection (2.7) of this hydraulic effect system (2). In addition, it shows the guide pin (2.8), mechanical guide wire connection pin (2.9), mechanical guide (2.11) and mechanical guide center of rotation (2.12) of the said hydraulic effect system (2). On the other hand, it presents the connection wires (2.13), rear movement transfer bracket (2.14), rear cylinder shaft connection point (2.15) and front cylinder shaft connection point (2.16) of the said hydraulic effect system (2), and front movement transfer bracket (2.17), hydraulic hoses (2.18) and sensor connection bracket (2.19) of the said hydraulic effect system (2).

### Mechanical Method:

This method transfers the steering motion of the tractor to shaft area through connection wires (4.5) made of steel material. There are 2 connection pins (4.1) secured on fifth wheel (1.2) and rotating with fifth wheel (1.2). Likewise, there are two mechanical guide wire connection pins (4.4) on the mechanical guide (2.11) located at steering center (1.6). The wires (4.5) connected to the connection pins (4.1) at the front are guided via gude pins (4.2, 4.3) and connected to the rear mechanical guide wire connection pins (4.4). The tension of the wires (2.13) must be same. Thus, steering action of tractor will turn the mechanical guide (2.11) through connection wires (4.5).

While transferring the turning motion of the tractor to mechanical guide (2.11), Ackerman Principle must be respected and adjustment must be made accordingly. This adjustment can be made with position of connection pins (4.1) located on fifth wheel (1.2) or position of connection pins (4.4) located on the mechanical guide (2.11).

### Hydraulic Method:

With this method, the steering motion of the tractor is transfered to axle area by means of hydraulic oil pressure. There are 2 fifth wheel wire connections (2.1) secured on fifth wheel (1.2) and rotating with fifth wheel (1.2). Connection wires (2.2) are installed between these connections and connections at front movement transfer bracket (2.17). Hydraulic cylinders (2.5) connected at front movement transfer bracket (2.17) to Front cylinder shaft connection point (2.16) pumps/sucks oil to/from rear hydraulic rear cylinders (2.6) with steering motin of front movement transfer bracket (2.17). Thus, oil is pumped to rear hydraulic rear cylinders (2.6) based on the steering motion of the tractor. As the rear cylinder shaft connection point (2.15) of rear clylinders (2.6) is connected to rear movement transfer bracket (2.14), the movemetn transfer bracket (2.14) turns depending on the pressure of the oil pumped to these cylinders. Connection wire (2.13) is installed between the front movement transfer bracket wire connections (2.7) on rear movement transfer bracket (2.14) and the mechanical guide wire connection pin (2.9) on mechanical guide (2.11). When the rear movement transfer bracket (2.14) turns, mechanical guide (2.11) will also turn accordingly. Thus, steering action of tractor will turn the mechanical guide (2.11) through hydraulic front and rear cylinders (2.5, 2.6).

While transferring the turning motion of the tractor to mechanical guide (2.11), Ackerman Principle must be respected and adjustment must be made accordingly. This adjustment can be made with position of the pins (2.1) located on fifth wheel (1.2), position of mechanical guide wire connection pins (2.9) on the mechanical guide (2.11), position of Front movement transfer bracket wire connection (2.4) and front movement transfer bracket wire connection (2.7) on front and rear movement transfer brackets (2.17, 2.14) and features of hydarulic front and rear cylinders (2.5, 2.6).

### Electrical Method

With this method, the steering motion of the tractor is transfered to axle area by means of electrical signals. Medium terminal voltage of the angle sensor (3.1) connected at the center of rotation (1.1) of the fifth wheel (1.2) changes depending on the steering motion of the tractor. Servo driver (3.4) which instantaneously tracks and interprets this change, gives instructions via PWM signal to the servo motor (3.6) located on the steering center (1.6) and connected to mechanical guide (2.11) through connection wires (3.8). Servo motor (3.6) turns the mechanical guide (2.11) according to the PWM signal. Thus, steering action of tractor will turn the mechanical guide (2.11) through servo driver (3.4) and servo motor (3.6).

While transferring the turning motion of the tractor to mechanical guide (2.11), Ackerman Principle must be respected and adjustment must be made accordingly. This adjustment can be made through the position of mechanical guide wire connection (3.7) located on mechanical guide or servo driver (3.4) circuit.

Performing alignment by following mechanical guide; when the wheels are aligned with closed loop hydraulic system, as the user starts to manually turn the wheels, the alignment of the wheels to the tractor will be disrupted. The following processes take place in such a case.

Steering hub (1.8) turns towards the direction to which the user turns the wheels. Meanwhile, the inductive sensors (2.10) connected to the sensor connection brackets (2.19) will also turn. Inductive sensors (2.10) connected on the connection bracket are passive prior to movement. After movement starts, the sensor at the opposite side of the direction towards which the wheel moves will be activated. Activation of this sensor allows the electrical system to perceive towards which direction does the wheel turn. When the user wishes to align the wheels, it will be sufficient to only press the automatic alignment button once. When the automatic alignment button is pressed, electrical system will start to turn the wheels towards the opposite direction of the active sensor. This turning action will continue until the active sensor turns passive. When the turning action stops, the vehicle would be aligned.

With this system, an electrical circuit has been designed while assuming that the wheels are aligned when both of the inductive sensors (2.10) are passive. Likewise, there may be an electrical circuit which assumes that the wheels are aligned when both of the sensors are active.

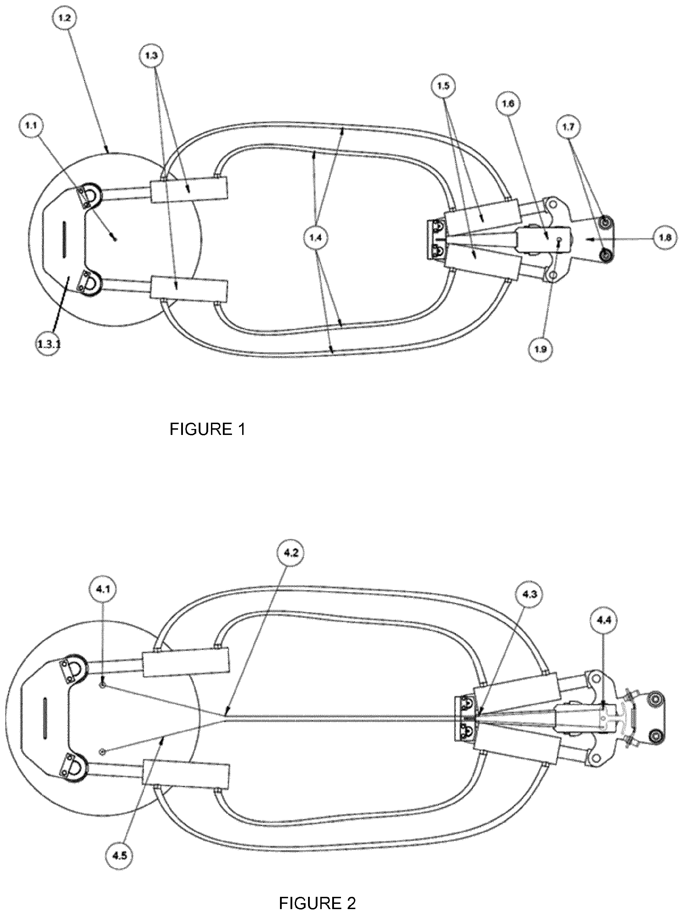

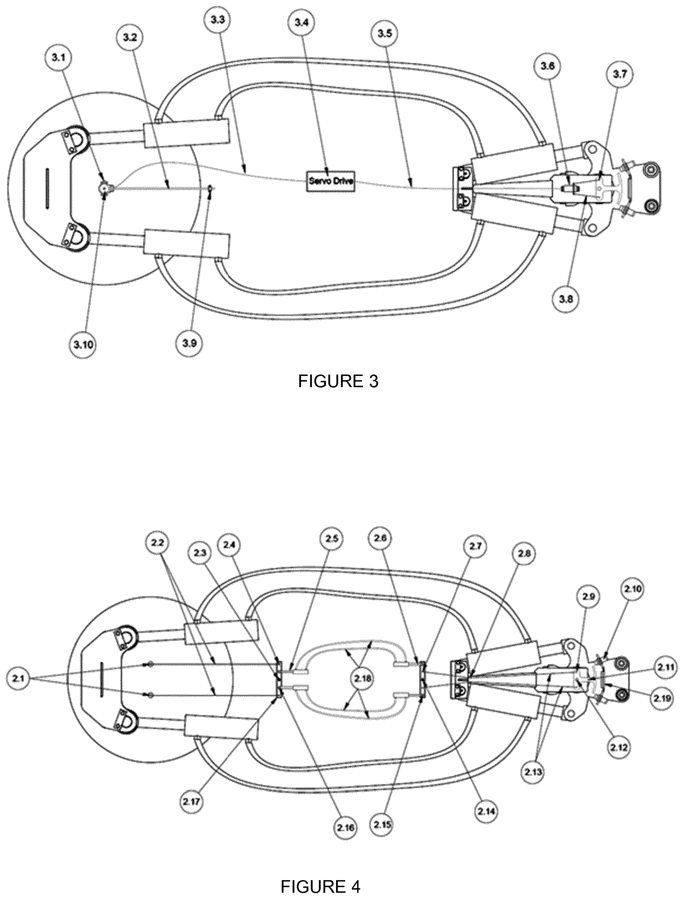

## Claims

1. The invention is an automatic alignment setup that is able to perform automatic alignment at any angle between tractor and trailers used in heavy load transportation and that has at least one fifth wheel (1.2) and a gooseneck (1.3.1) with at least two connection points set up on this fifth wheel (1.2), and it is **characterized in that**;
- It incorporates a mechanical effect system (4) with connection wires (4.5) secured at at least two points, set up between the said fifth wheel (1.2) and steering hub (18).

2. It is an automatic alignment setup (1) in accordance with the Claim 1, and it is **characterized in that**; the said mechanical effect system (4) incorporates connection pins (4.1) and guide pins (4.2) and rear guide pins (4.3).

3. It is an automatic alignment setup (1) in accordance with the Claim 1, and it is **characterized in that**; the said mechanical effect system (4) incorporates mechanical guide wire connection pins (4.4) secured on the steering hub (1.6)

4. It is an automatic alignment setup (1) in accordance with the Claim 1, and it is **characterized in that**; it incorporates an electric effect system (3) with servo motor (3.6), angle sensor (3.1) and securing shaft (3.2) set up between the said fifth wheel (1.2) and steering hub (18).

5. It is an automatic alignment setup (1) in accordance with the Claim 5, and it is **characterized in that**; the said electrical effect system (3) incorporates angle sensor electrical cable (3.3), mechanical guide wire connection (3.7) and servo motor electrical cable (3.5).

6. It is an automatic alignment setup (1) in accordance with the Claim 5, and it is **characterized in that**; the said electrical effect system (3) incorporates at least one servo driver (3.4).

7. It is an automatic alignment setup (1) in accordance with the Claim 5, and it is **characterized in that**; the said electrical effect system (3) incorporates connection wire (3.8).

8. It is an automatic alignment setup (1) in accordance with the Claim 5, and it is **characterized in that**; the said electrical effect system (3) incorporates shaft securing point (3.9) and angle sensor cylinder (3.10).

9. It is an automatic alignment setup (1) in accordance with the Claim 1, and it is **characterized in that**; it incorporates a hydraulic effect system (2) with fifth wheel wire connections (2.1) and connection wires (2.2) secured at at least two points, front cylinder (2.5), rear cylinder (2.6) and inductive sensors (2.10), set up between the said fifth wheel (1.2) and steering hub (18).

10. It is an automatic alignment setup (1) in accordance with the Claim 10, and it is **characterized in that**; the said hydraulic effect system (2) incorporates front movement transfer bracket center (2.3) front movement transfer bracket wire connection (2.4) and front movement transfer bracket wire connection (2.7).

11. It is an automatic alignment setup (1) in accordance with the Claim 10, and it is **characterized in that**; the said hydraulic effect system (2) incorporates guide pin (2.8), mechanical guide wire connection pin (2.9), mechanical guide (2.11) and mechanical guide center of rotation (2.12).

12. It is an automatic alignment setup (1) in accordance with the Claim 10, and it is **characterized in that**; the said hydraulic effect system (2) incorporates connection wires (2.13), rear movement transfer bracket (2.14), rear cylinder shaft connection point (2.15) and front cylinder shaft connection point (2.16).

13. It is an automatic alignment setup (1) in accordance with the Claim 10, and it is **characterized in that**; the said hydraulic effect system (2) incorporates front movement transfer bracket (2.17), hydraulic hoses (2.18) and sensor connection bracket (2.19).
